Europäisches Patentamt

European Patent Office

Office européen des brevets

(11) Veröffentlichungsnummer: **0 302 292**

**A1**

(12) **EUROPÄISCHE PATENTANMELDUNG**

(21) Anmeldenummer: **88111541.4**

(22) Anmeldetag: **18.07.88**

(51) Int. Cl.⁴: **G02B 6/38**

(30) Priorität: **21.07.87 DE 8709993 U**

(43) Veröffentlichungstag der Anmeldung:
**08.02.89 Patentblatt 89/06**

(84) Benannte Vertragsstaaten:
**AT BE CH DE ES FR GB GR IT LI LU NL SE**

(71) Anmelder: **Siemens Aktiengesellschaft Berlin
und München
Wittelsbacherplatz 2
D-8000 München 2(DE)**

(72) Erfinder: **Löffler, Herbert
Kirtaweg 38
D-8000 München 82(DE)**

(54) **Steckverbinder für faserförmige Lichtwellenleiter.**

㉗ Zur Verriegelung der von beiden Seiten her in eine Kupplungshülse (1) einsteckbaren Steckerstifte (5) - die Steckerstifte sind jeweils gegen eine Steckerstifthalterung federnd verspannt und werden dadurch in eine vorderste Position gedrückt - ist für jeden Steckerstift ein in einem Querschlitz (16) der Kupplungshülse gelagerter plattenförmiger Schieber (18) vorgesehen. Der Schieber rastet selbsttätig mit dem Rand einer Durchtrittsöffnung in eine Kerbe (22) eines hülsenförmigen Teils der Steckerstifthalterung ein, der in die Kupplungshülse ragt. Beide Schieber einer Kupplungshülse hängen über ein Querstück, das an der Kupplungshülse mittig festgelegt ist und als Schieberfeder dient, einstückig zusammen.

## Steckverbinder für faserförmige Lichtwellenleiter

Die Erfindung bezieht sich auf einen Steckverbinder für faserförmige Lichtwellenleiter, mit Steckerstiften, in denen jeweils ein Endabschnitt eines Lichtwellenleiters konzentrisch und mit seiner Stirnseite bündig zu einer vorderen Stirnseite des Stiftes gefaßt ist, und mit einer Kupplungshülse, in welche von beiden Seiten her jeweils ein Steckerstift einsteckbar ist, wobei die Steckerstifte jeweils in einer Steckerstift-Halterung längsverschieblich gelagert und durch eine zwischen Halterung und Steckerstift eingespannte Feder in einer vorderen Position gehalten werden.

Ein solcher Steckverbinder ist aus der EP-A2-0 118 804 bekannt. Bei diesem bekannten Steckverbinder werden die Steckerstifte in der Kupplungshülse dadurch mit ihren Stirnseiten aneinandergedrückt gehalten, daß jede Steckerstifthalterung mittels einer Überwurfmutter mit einem Außengewinde der Kupplungshülse verschraubt wird. Solche Überwurfmuttern sind jedoch relativ aufwendig herzustellende Teile.

Zudem behindert eine Überwurfmutter insbesondere bei Einzelsteckverbindern, bei denen mittels einer einzigen Kupplungshülse lediglich zwei Steckerstifte zusammengesteckt werden, das rasche Stecken und Ziehen der Steckerstifte.

Aufgabe vorliegender Erfindung ist es daher, einen Steckverbinder der eingangs genannten Art derart weiterzubilden, daß unter Beibehaltung einer hohen Betriebssicherheit und Funktionstüchtigkeit des Steckverbinders, die Ver- und Entriegelung eines Steckerstiftes und einer Kupplungshülse wesentlich vereinfacht wird.

Erfindungsgemäß ergibt sich die Lösung dieser Aufgabe dadurch, daß die Halterung eines jeden Stiftes mit einem in die Kupplungshülse einsteckbaren vorderen Hülsenabschnitt versehen ist, daß die Kupplungshülse für jeden Steckerstift im Bereich eines vorderen Hülsenabschnittes der Halterung einen die Kupplungshülse in radialer Richtung und quer zur Längsachse der Kupplungshülse durchsetzenden Schlitz aufweist, daß in jedem Schlitz ein mit einer Durchtrittsöffnung für den vorderen Hülsenabschnitt der Halterung versehener federbelasteter und plattenförmiger Schieber angeordnet ist und daß jeder Hülsenabschnitt eine Einkerbung zur Aufnahme eines Abschnittes eines die Durchtrittsöffnung des Schiebers begrenzenden Randes aufweist.

Durch die Querschlitze in der Kupplungshülse werden die Schieber genau rechtwinklig zur Bewegungsrichtung der Steckerstifte gehalten und bilden dadurch stabile Widerlager zum Abstützen der Steckerstifthalterungen an der Kupplungshülse.

In weiterer Ausgestaltung der Erfindung kann vorgesehen sein, daß ein Ende eines jeden Schiebers über einen etwa halbkreisförmig nach außen gebogenen Betätigungsabschnitt einstückig mit einem zur Kupplungshülse achsparallelen Federabschnitt, der endseitig an der Kupplungshülse festgelegt ist, zusammenhängt.

Durch den zur Kupplungshülse achsparallelen Federabschnitt wird auf besonders einfache Weise die zum automatischen Einrasten des Schiebers in die Kerbe des Hülsenabschnittes erforderliche Federbelastung des Schiebers bereitgestellt.

Weiter kann vorgesehen sein, daß die Federabschnitte beider Schieber einer Kupplungshülse mit den vom Betätigungsabschnitt abgewandten Enden einstückig zusammenhängen und daß die Kupplungshülse unterhalb der Betätigungsabschnitte mit einer Vertiefung versehen ist.

Hierdurch ergibt sich ein etwa U-förmiges Gebilde, dessen U-Schenkel die beiden Schieber sind und das einfach gehandhabt und mit der Kupplungshülse verbunden werden kann. Die Vertiefungen begünstigen eine Verbiegung der Federabschnitte gegen die Kupplungshülse und eine dadurch bewirkte Entriegelung eines Steckerstiftes.

Ein Ausführungsbeispiel der Erfindung wird nachfolgend anhand einer FIG, die in Vergrößerung einen Längsschnitt durch eine Kupplungshülse mit in die Kupplungshülse eingesteckten Steckerstiften zeigt, noch näher erläutert.

Im einzelnen ist der FIG zu entnehmen, daß eine vorzugsweise aus Kunststoff bestehende zylindrische Kupplungshülse 1 eine Längsbohrung 2 aufweist. In einem mittleren Teil der Längsbohrung 2 ist eine mit einem Schlitz versehene Führungshülse 3 mit Spiel gelagert. Die Führungshülse 3 wird durch kurze Sperrhülsen 4 in der Kupplungshülse 1 festgehalten. Die Sperrhülsen 4 sitzen im Preßsitz in der Längsbohrung 2 der Kupplungshülse 1 und begrenzen dadurch den Bewegungsspielraum der Führungshülse 3 in axialer Richtung.

Die Längsbohrung 2 ist so beschaffen, daß von beiden Seiten her in die Kupplungshülse 1 Steckerstifte 5 eingesteckt werden können. In den Steckerstiften 5 sind konzentrisch zu einem zylindrischen Mantel der Stifte 5 Endabschnitte 6 von lichtleitenden Fasern angeordnet. Stirnflächen der Endabschnitte 6 und der Stifte 5 sind jeweils zueinander bündig und genau quer zu einer Längsachse 7 der Führungshülse 3 bzw. der Kupplungshülse 1 ausgerichtet.

Die Steckerstifte 5 sitzen längsbeweglich in einem vorderen Hülsenabschnitt 8 einer Steckerstifthalterung 9. Ein mit dem hinteren Ende eines Steckerstiftes 5 verbundener flanschartiger Ansatz 10 gleitet dabei in einem im Durchmesser vergrößerten Bohrungsabschnitt 11 einer den vorderen Hülsenabschnitt 8 der Steckerstifthalterung 9 durchsetzenden Längsbohrung. Zwischen dem Ansatz 10 und einer Stirnwand 12 der Steckerstifthalterung 9 ist eine Schraubendruckfeder 13 verspannt, wodurch jeder Steckerstift 5 bezüglich seiner zugehörigen Steckerstifthalterung 9 in eine vorderste Position gedrückt wird. In dieser liegt der Ansatz 10 einem im Inneren des Hülsenabschnittes 8 gebildeten Anschlag 14 an.

In diesem Zustand, also jeweils mit in der vordersten Position befindlichen Steckerstiften 5, werden die beiden Steckerstifte des Steckverbinders von beiden Seiten her in die Längsbohrung 2 der Kupplungshülse 1 eingesteckt. Dabei geraten vordere Abschnitte der Steckerstifte 5 in die Führungshülse 3, welche infolge ihrer Längsschlitzung federnd aufweitbar ist und sich eng den Steckerstiften 5 anschmiegt. Infolge der mit Spiel versehenen Lagerung eines jeden Steckerstiftes 5 in seiner zugeordneten Steckerstifthalterung 9, insbesondere im Hülsenabschnitt 8, und der ebenfalls spielbehafteten Lagerung der Führungshülse 3 in der Kupplungshülse 1 werden die beiden Steckerstifte 5 durch die Führungshülse 3 genau aufeinander ausgerichtet, so daß die Längsachsen der Endabschnitte 6 genau fluchten.

Um dabei sicherzustellen, daß die federbelasteten Steckerstifte 5 mit ihren Stirnseiten spielfrei aneinanderliegen, ist es erforderlich, jede Steckerstifthalterung 9 an der Kupplungshülse so festzulegen, daß sich jeder Steckerstift gegen die Wirkung der Feder 13 an der zugeordneten Halterung 9 abstützen kann.

Hierzu ist die Kupplungshülse 1 so lang ausgebildet, daß neben den Steckerstiften 5 auch der vordere Hülsenabschnitt 8 einer jeden Steckerstifthalterung 9 beim Einstecken eines Steckerstiftes in die Hülsenbohrung 2 bzw. in die Führungshülse 3 in einen im Durchmesser vergrößerten Abschnitt 15 der Hülsenbohrung 2 eindringt.

Im Bereich eines jeden Bohrungsabschnittes 15 der Hülsenbohrung 2 ist die Kupplungshülse 1 mit einem rechtwinklig zur Achse 7 gerichteten Querschlitz 16 versehen. Ein aus Flachmaterial bestehender, U-förmig gebogener Bügel 17 steckt mit seinen U-Schenkeln 18 in den Schlitzen 16 und ist mit einem mittleren Abschnitt 19 eines Querstückes 20, das parallel zur Achse 7 gerichtet ist, an der Außenseite der Hülse 1 fixiert.

Die U-Schenkel 18 des Bügels 17 bilden plattenförmige Schieber, die in den Schlitzen 16 quer zur Einsteckrichtung der Steckerstifte 5 geringfügig bewegbar sind. Die U-Schenkel 18 sind mit an die Hülsenabschnitte 8 angepaßten Durchtrittsöffnungen 21 versehen, während die Hülsenabschnitte 8 außen ringförmige Kerben 22 aufweisen.

Jeder Schieber ist durch einen Endabschnitt des Bügelquerstücks 20 so federnd vorbelastet, daß ein Rand der Durchtrittsöffnungen 21 in den Bohrungsabschnitt 15 ragt. Die Hülsenabschnitte 8 sind an einer Stirnseite 23 mit einer keilförmigen Abschrägung versehen, die den in den Bohrungsabschnitt 15 ragenden Rand der Durchtrittsöffnung 21 beim Einstecken der Steckerstifte 5 in die Kupplungshülse 1 aus dem Bohrungsabschnitt 15 hinausdrängt. Sobald jedoch die Kerbe 22 den Bereich eines Schiebers erreicht, wird der Rand einer Durchtrittsöffnung 21 des Schiebers durch die Federwirkung des Querstücks 20 in die Kerbe 22 gezogen und dadurch ein Hülsenabschnitt 8 an der Kupplungshülse 1 verriegelt.

Jeder U-Schenkel 18 des Bügels 17 geht über einen etwa halbkreisförmig nach außen gebogenen Betätigungsabschnitt 24 in das Querstück 20 über. Außerdem ist unterhalb des Betätigungsabschnittes 24 jeweils eine Vertiefung 25 in der Kupplungshülse 1 vorgesehen. Wird der Betätigungsabschnitt 24 gegen die Kupplungshülse 1 gedrückt, was durch die Vertiefung 25 begünstigt ist, so wird dadurch der in der Kerbe 22 steckende Rand der Durchtrittsöffnung 21 aus der Kerbe herausbewegt. Die Feder 13 schnellt nun den Hülsenabschnitt 8 aus der Kupplungshülse 1 und der zugehörige Steckerstift 5 kann danach aus der Kupplungshülse 1 ohne weiteres herausgezogen werden.

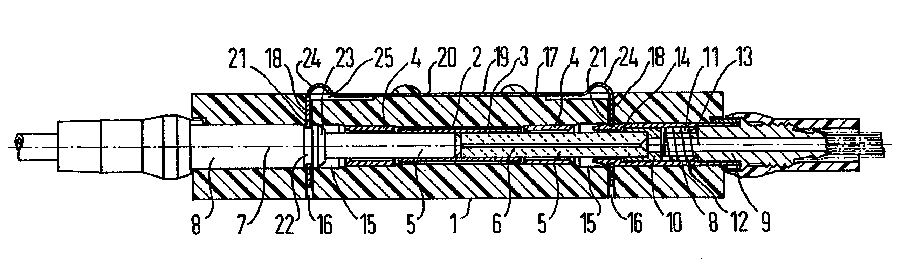

## Ansprüche

1. Steckverbinder für faserförmige Lichtwellenleiter, mit Steckerstiften, in denen jeweils ein Endabschnitt eines Lichtwellenleiters konzentrisch und mit seiner Stirnseite bündig zu einer vorderen Stirnseite des Stiftes gefaßt ist, und mit einer Kupplungshülse, in welche von beiden Seiten her jeweils ein Steckerstift einsteckbar ist, wobei die Steckerstifte jeweils in einer Steckerstift-Halterung längsverschieblich gelagert und durch eine zwischen Halterung und Steckerstift eingespannte Feder in einer vorderen Position gehalten werden, **dadurch gekennzeichnet,** daß die Halterung eines jeden Stiftes mit einem in die Kupplungshülse einsteckbaren vorderen Hülsenabschnitt versehen ist, daß die Kupplungshülse für jeden Steckerstift im Bereich eines vorderen Hülsenabschnittes der Halterung einen die Kupplungshülse in radialer Richtung und quer zur Längsachse der Kupplungshülse durchsetzenden Schlitz aufweist, daß in jedem Schlitz ein mit einer Durchtrittsöffnung für den vorderen Hülsenabschnitt der Halterung versehener federbelasteter und plattenförmiger Schieber angeordnet ist und daß jeder Hülsenabschnitt eine Einkerbung zur Aufnahme eines Abschnittes eines die Durchtrittsöffnung des Schiebers begrenzenden Randes aufweist.

2. Steckverbinder nach Anspruch 1 , **dadurch gekennzeichnet,** daß ein Ende eines jeden Schiebers über einen etwa halbkreisförmig nach außen gebogenen Betätigungsabschnitt einstückig mit einem zur Kupplungshülse achsparallelen Federabschnitt, der endseitig an der Kupplungshülse festgelegt ist, zusammenhängt.

3. Steckverbinder nach Anspruch 2,**dadurch gekennzeichnet,** daß die Federabschnitte beider Schieber einer Kupplungshülse mit den vom Betätigungsabschnitt abgewandten Enden einstückig zusammenhängen.

4. Steckverbinder nach einem der Ansprüche 2 oder 3 , **dadurch gekennzeichnet,** daß die Kupplungshülse unterhalb der Betätigungsabschnitte mit einer Vertiefung versehen ist.

EP 0 302 292 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 8, Nr. 133 (P-281)[1570], 20. Juni 1984; & JP-A-59 36 207 (OPUTO K.K.) 28-02-1984 * Insgesamt * | 1 | G 02 B 6/38 |
| Y,D | EP-A-0 118 804 (ALLIED CORP) * Figuren 1A-C; Seite 3, Zeilen 24-38,34-38; Seite 5, Zeilen 1-6 * | 1 | |
| A | EP-A-0 105 597 (AMP INC.) * Figuren 9-11; Seite 5, Zeilen 1-15 * | 1-3 | |
| A | GB-A-1 599 688 (PLESSEY) * Figuren 1,2a-c; Seite 1, Zeilen 48-100; Seite 2, Zeilen 1-55 * | 1,3 | |

| RECHERCHIERTE SACHGEBIETE (Int. Cl.4) |
|---|
| G 02 B 6/00 |

Der vorliegende Recherchenbericht wurde für alle Patentansprüche erstellt

| Recherchenort | Abschlußdatum der Recherche | Prüfer |
|---|---|---|
| DEN HAAG | 04-11-1988 | MATHYSSEK K. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
·······································································
& : Mitglied der gleichen Patentfamilie, übereinstimmendes
   Dokument

EPO FORM 1503 03.82 (P0403)